# EUROPEAN PATENT SPECIFICATION

(11) **EP 2 479 126 B1**
(45) Date of publication and mention of the grant of the patent: **08.01.2014**
(21) Application number: 12000270.4
(22) Date of filing: 18.01.2012
(51) Int. Cl.: B65G 47/90, A01G 9/08

(54) **Robot for setting out pots**
Roboter zum Ausstellen von Töpfen
Robot permettant de disposer des pots

(30) Priority: 24.01.2011 BE 201100034
(43) Date of publication of application: 25.07.2012
(73) Proprietor: DEGRAMEC, besloten vennootschap Met beperkte aansprakelijkheid, 9080 Lochristi (BE); Elbers, Hans, 47624 Kevelaer (DE)
(72) Inventor: Degraeve, Miguel, 9080 Lochristi (BE)
(74) Representative: Donné, Eddy

(56) References cited:
- EP-A1- 0 609 148
- WO-A1-2005/084417
- DE-U1- 9 211 099
- NL-C2- 1 008 823

## Description

The present invention relates to a robot for setting out pots, more specifically plant pots.

It is known that to cultivate plants, in the first stage after germination the plants are generally planted in pots that are placed close together.

Once the plants set out in this way have grown sufficiently, they have to be given more room for their good development, for which purpose the pots have to be placed further apart from one another.

This is generally done by setting out the pots in rows with a given distance between them.

It is important for the pots to be in the right position with respect to one another, during the growth of the set-out plants, in order to give the pots the necessary water and necessary nutrients. To this end a mobile artificial watering system is generally used with spray arms and spray nozzles that are positioned above the pots. It is important for the spray nozzles to be positioned exactly above the pots in order to prevent the wastage of water and nutrients next to the pots, and in order to be certain that the plants get enough water and nutrients.

Devices are already known for moving and spreading out pots with plants at a greater distance from one another. See e.g. EP 0 609 148 A1 or DE 9 211 099 U1.

However, these known devices have the disadvantage that they are complex and relatively expensive and that the accuracy with which the pots are placed at well defined positions under the spray nozzles of the watering system often leaves something to be desired, which leads to the wastage of water or insufficient dosing or an overdose of water and nutrients for the optimum growth of plants.

Another disadvantage is that with the known devices a relatively large amount of time is needed to set out the pots between the original growth phase and the subsequent growth phase, whereby the pots are placed further apart.

The purpose of the present invention is to provide a solution to at least one or more of the aforementioned and other disadvantages.

To this end the invention concerns a robot for setting out pots on a base that primarily consists of an undercarriage that can move in at least one drive direction and on this undercarriage:
- a wide buffer conveyor belt on which there can be a number of rows of pots placed next to one another along the width of the buffer conveyor belt at the same time, in order to move the rows of pots in a transport direction parallel to the drive direction;
- at one end of the buffer conveyor belt there is a 'singularisation system' for separating one row of pots from the rest of the pots, with a distance between the separated row of pots and the rest of the pots;
- a spreading fork with a guide rail that extends breadthways along the buffer conveyor belt, and on which a number of pick-up forks for pots are movably affixed to pick up the pots of the separated row of pots and to spread out the pots along the width of the buffer conveyor belt with the desired distance between the pots;
- a manipulator to be able to move the spreading fork in the vertical direction and in a direction parallel to the drive direction in order to be able to move the separated row of pots from the buffer conveyor belt to the aforementioned base; and,
- a controller to control the robot in a cyclical way such that in each cycle the pots on the buffer conveyor belt are separated row by row; the pots of the separated row are picked up from the buffer conveyor belt, spread out and moved to the ground and the robot is moved over a desired distance in the aforementioned drive direction in order to commence a subsequent cycle.

Such a robot according to the invention has the advantage that the entire operation of setting out the pots can be done practically automatically, except for the supply of the pots, which can be done in a simple way by means of a forklift truck equipped with a series of forks with which a large number of pots that are close together can be picked up in one go, and which can place this large number of pots on the buffer conveyor belt of the robot at the same time, in order to further set them out.

Once the pots have been placed on the buffer conveyor belt, they can be moved row by row in successive cycles, thanks to the aforementioned controller, and picked up from the buffer conveyor belt in a spread-out position and set down on the base, and this with quite a high accuracy with regard to the position of the pots set down and the mutual distance between the pots.

This enables the plants in the spread-out pots to be provided with the correct quantity of water and nutrients with great precision in a subsequent growth stage.

With respect to known installations the robot according to the invention is simple and cheap to produce, and pots can be set out at a high speed, such that relatively little time is required to set out a large series of pots.

Preferably the pick-up forks of the spreading fork are affixed alternately at two different heights, and the controller is such that the pots are set down on the base in two goes, i.e. in a first stage in which only the pots in the pick-up forks in the lowest position are set down on the base, after which the robot with the remaining pots in the pick-up forks in the highest position is moved over a desired distance and then these remaining pots are set down on the base in the second stage.

When the pick-up forks are in alternate high and low positions, the pots that are set down in the first stage and the pots that are set down in the second stage follow each other in a chequer formation, such that the distance between the pots is approximately the same in all directions and whereby the plants are given more space to grow than when the pick-up forks are all at the same height and are set down on the base in one go.

Preferably the controller contains a GPS receiver for the location of the robot and if applicable the spreading fork, such that the exact and accurate positioning of the pots is possible.

With the intention of better showing the characteristics of the invention, a few preferred embodiments of a robot according to the invention are described hereinafter by way of an example, without any limiting nature, with reference to the accompanying drawings, wherein:
figure 1 schematically shows in perspective a robot for setting out pots according to the invention;
figure 2 shows a side view according to arrow F2 in figure 1;
figure 3 shows a view in perspective according to arrow F3 in figure 1;
figure 4 shows an exploded view of the robot shown in figure 3;

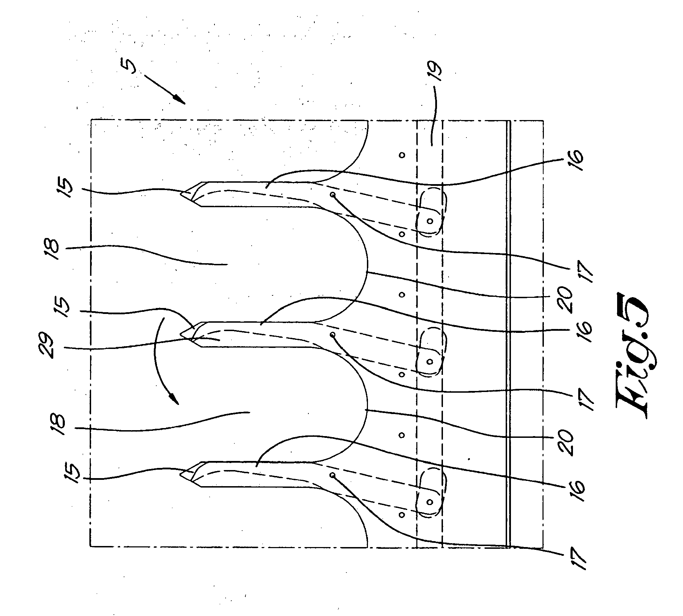

figure 5 shows, on a larger scale, the part designated by the box F5 in figure 4, and this seen according to arrow F5 in figure 4;
figures 6 to 18 inclusive show successive steps during the use of the robot of figure 1 for setting out pots, respectively according to a view in the direction of arrow F5 in figure 4 and a side view according to figure 2;
figure 19 shows an alternative embodiment of a robot, as shown in figure 1;

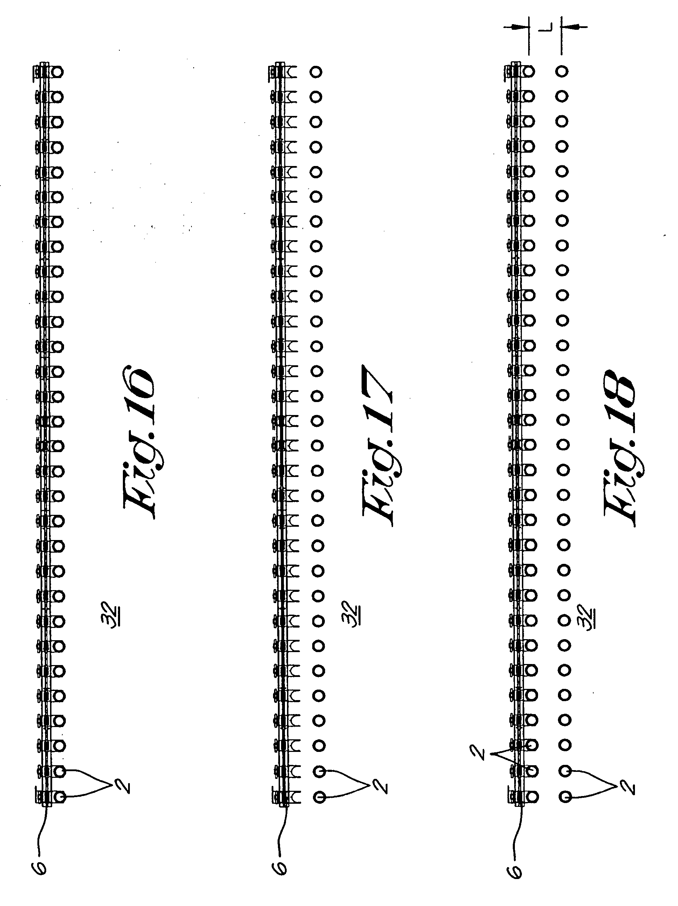

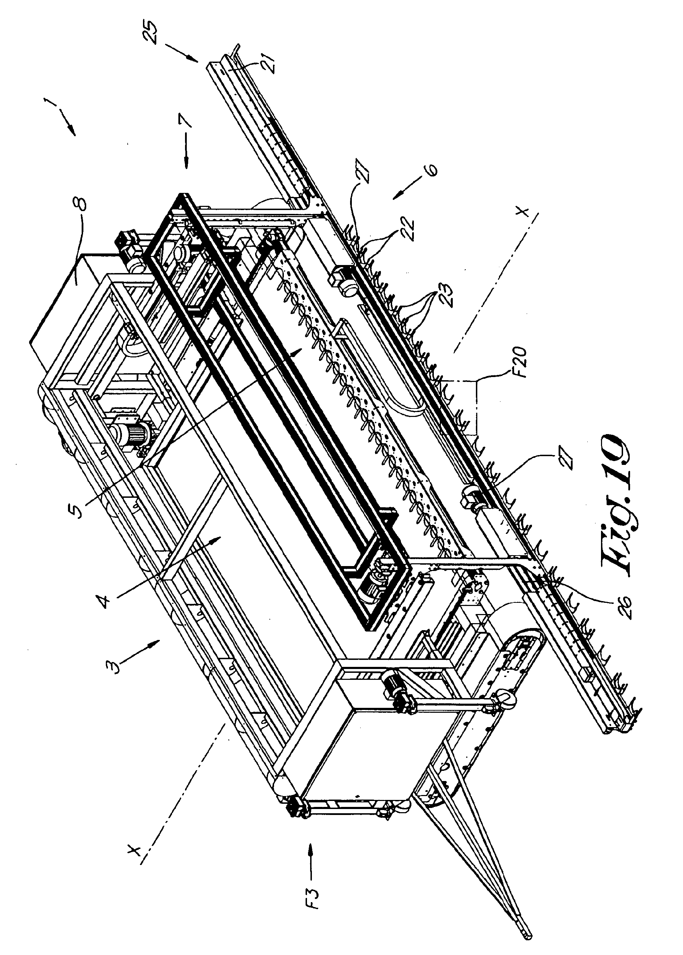

figures 19 to 23 inclusive show successive steps during the use of the alternative embodiment of a robot according to the invention, as shown in figure 18.

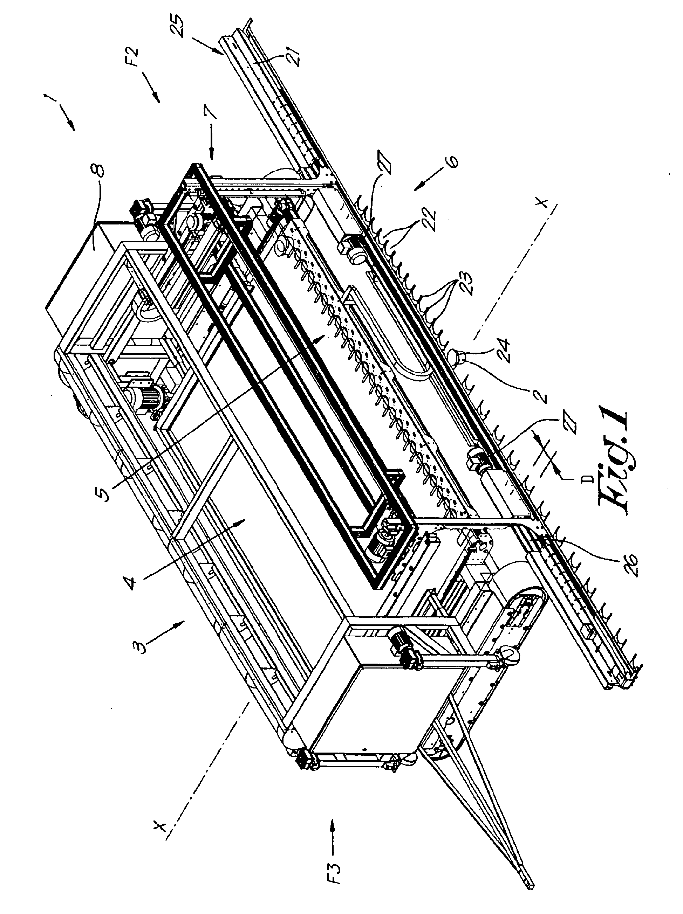

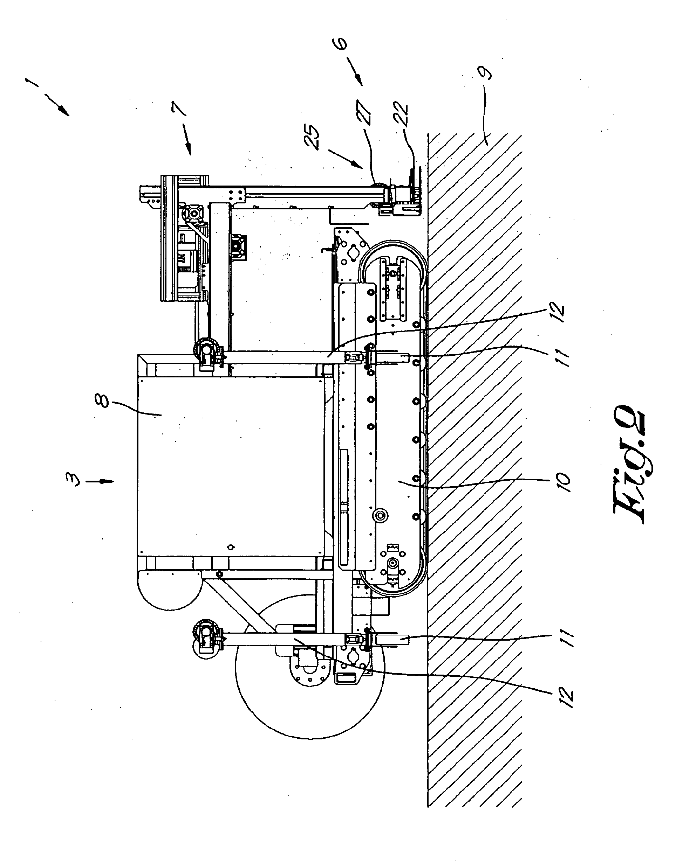

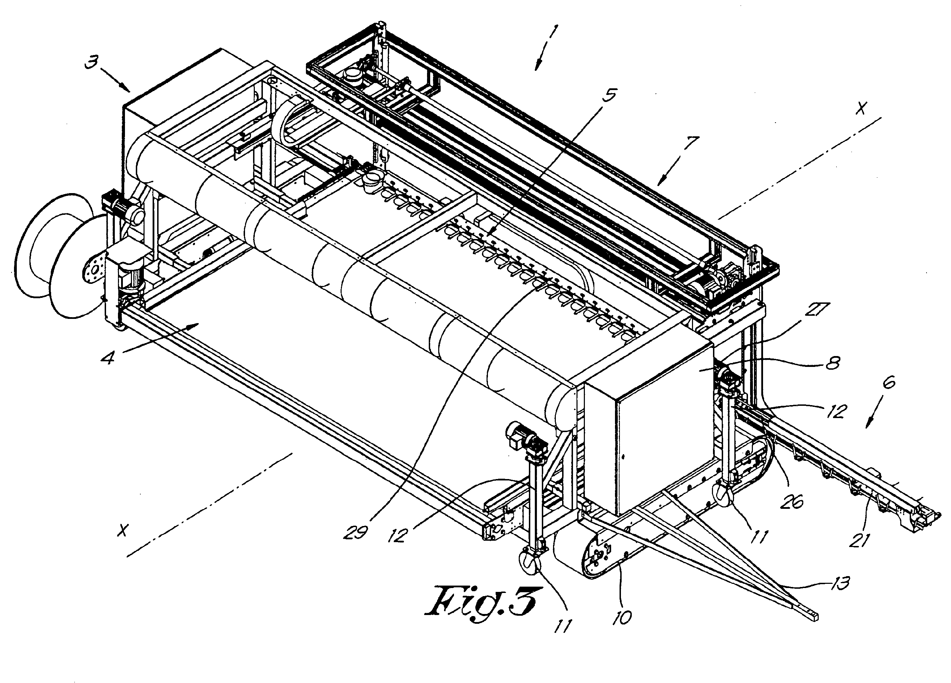

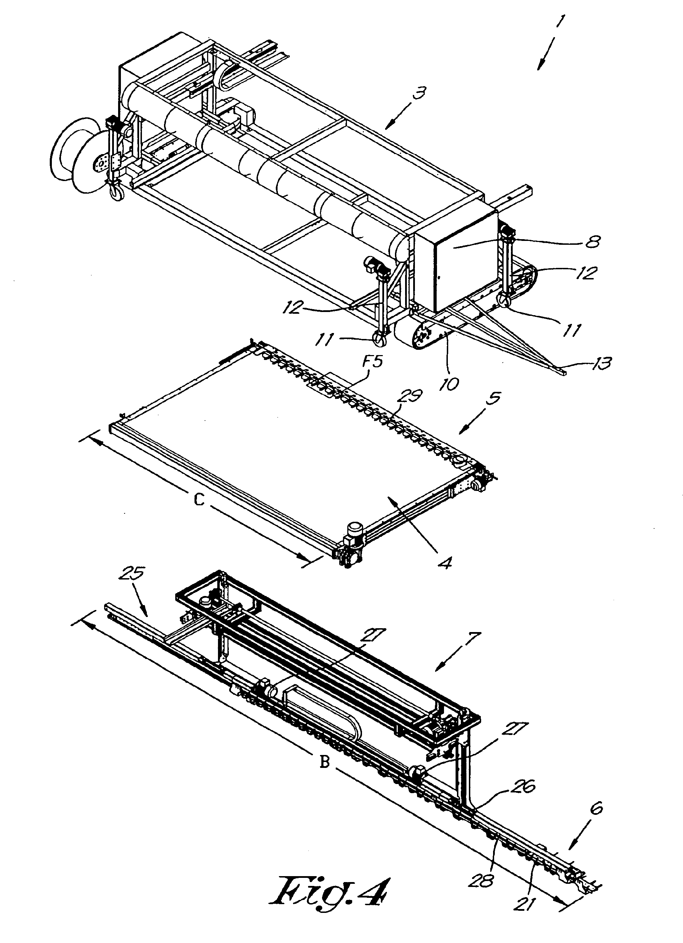

The robot 1 shown in figures 1 to 4 for moving pots 2 consists of the main components that are partly shown as separate components in figure 4, i.e. a mobile undercarriage 3; a wide buffer conveyor belt 4 affixed on the undercarriage 3; a 'singularisation system' 5 placed at one end of the buffer conveyor belt 4; a spreading fork 6; a manipulator 7 to move the spreading fork 6 in the vertical direction and in a direction parallel to the drive direction X-X'; and, a controller 8 to control the robot 1 in a cyclical way such that in each cycle the pots 2 are picked up row by row from the buffer conveyor belt 4 and set down on the base 9 in a spread-out state.

The mobile undercarriage 3 is equipped with a caterpillar track drive 10 on each side of the buffer conveyor belt 4 to move the undercarriage 3 in the drive direction X-X'.

Furthermore the undercarriage 3 has four wheels 11 that are adjustable in height and which to this end are affixed on telescopic legs 12.

The wheels 11 are adjustable in height between an operating position in which the wheels 11 are pulled upwards and the robot 1 rests on the caterpillar tracks, as shown in figures 1 to 3, and a conveyor belt not shown in the drawings whereby the wheels 11 are let down to push the robot 1 with the caterpillar tracks 10 from the base 9, whereby the robot 1 rests on the wheels 11 in order to be able to be moved.

To this end the mobile undercarriage 3 is equipped with a shaft or towbar 13 in order to be able to push or pull the robot 1, for example by means of a tractor or another motorised vehicle.

The singularisation system 5 at the end of the buffer conveyor belt 4 is formed by a toothed slat 14 with teeth 15 that protrude above the buffer conveyor belt 4 in the direction of the pots 2 on the buffer conveyor belt 4, and which are a distance A apart along the width of the buffer conveyor belt 4, which primarily matches the diameter of the pots 2 to be set out, more specifically the diameter of the pots 2 at the height of the teeth 14 concerned above the buffer conveyor belt 4.

Each tooth 15 is equipped with a claw 16 that can be rotated around a vertical axis 17 between an open position, whereby the opening 17 between two teeth 15 is primarily clear, as shown in figure 4, and a closed position whereby the opening 18 between two teeth 15 is at least partially obstructed to secure the pots 2 between the teeth 15 when the buffer conveyor belt 4 moves.

The claws 16 are equipped with a common drive rod 19 with which the claws 16 are rotated simultaneously around their axis 17.

Between the teeth 15, the slat 14 is hollowed out with circular arch-shaped recesses 20 that each form an alignment rabbet for the pots 2 when they are moved with the buffer conveyor belt 4 in the direction of the singularisation system 5.

The radius of curvature of the circular arch-shaped recesses 20 is preferably equal to the diameter of the pots 2 at the height of the teeth 15 above the buffer conveyor belt 4.

The spreading fork 6 is primarily formed by a guide rail 21 on which a number of pick-up forks 22 for pots 2 are movably affixed.

The spreading fork 6 extends along the width of the buffer conveyor belt 4 and protrudes over a certain distance on either side of the buffer conveyor belt 4, whereby the length B of the rail is longer than the width C of the buffer conveyor belt 4, primarily corresponding to the width C of the toothed slat 14 of the singularisation system 5.

The number of pick-up forks 22 is preferably the same as the number of openings 18 between the teeth 15 of the toothed slat 14 of the singularisation system 5.

The pick-up forks 22 are each equipped to be able to pick up one single pot 2 and to this end are equipped with forks 23 with a spacing equal to the diameter of the pot 2, for example just below the collar 24 on the top edge of the pot 2, at least when a pot 2 has such a collar 24.

The width D of the pick-up forks 22 is such that, when they are pushed together on the guide rail 21, they are spread out over a total width C that is equal to the width C of the toothed slat 14 of the singularisation system 5 and such that, when the spreading fork 6 is positioned opposite the toothed slat 14, there is a pick-up fork 22 for each opening 18 between the teeth 15 of the toothed slat 14.

The pick-up forks can each be equipped with a separate drive to be able to slide them on the guide rail 22, or in the simplified form of the drawings can be equipped with a drive 25 for each of the outermost pick-up forks 21, for example in the form of a belt drive 26 driven by a motor 27.

The other pick-up forks 22 are then connected together by means of flexible foldable belts 28, preferably in the form of a part of a toothed belt, such that when the outermost pick-up fork 22 is moved outwards, in other words in the direction of an extremity of the guide rail 21, the pick-up forks connected to it are carried by this movement to spread the pick-up forks 22 further apart than when they are positioned against one another.

The length of the flexible foldable belts 28 determines the mutual distance between the pick-up forks 22.

Figure 1 shows a part of the pick-up forks 22 in a situation whereby they are positioned against each other, and another part of the pick-up forks 22 is drawn in a more spread-out position.

Preferably the pick-up forks 22 present a rounded hollowing between the forks 23 whose radius of curvature primarily matches the diameter of the pots 2 just below the collar 24 of these last-mentioned.

Furthermore the robot 1 on the mobile undercarriage 3 is equipped with a manipulator 7 to be able to move the spreading fork 6 in the vertical direction and in a direction parallel to the drive direction X-X', to enable pots 2 to be moved with the spreading fork 6 from the buffer conveyor belt 4 to the base 9 in front of the robot 1.

The robot 1 is preferably equipped with an automatic controller 8 with which the drives for the components of the robot 1 can be controlled, more specifically the drives for the caterpillar tracks 10, the buffer conveyor belt 4, the claws 16 of the singularisation system 5, the drives for moving the manipulator 7 and the drives for the pick-up forks 22, whether individual drives or the drives for the outermost pick-up forks 22.

The controller 8 can thereby be equipped in the conventional way with the necessary detection means such as limit switches, light sensors, stepper motors and similar.

Additionally the controller can be connected to a GPS receiver for the location of the robot 1, more specifically the spreading fork 6.

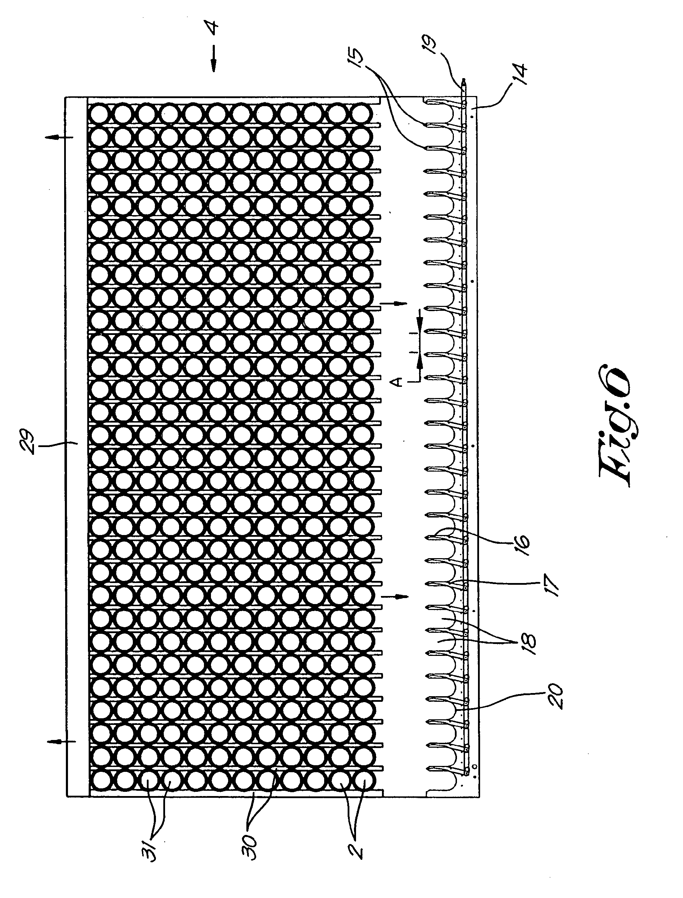

The use of the robot 1 is very simple and is illustrated on the basis of figures 6 to 18.

At the start of the operation to spread out the pots 2, first and foremost the pots 2 to be spread out with plants that have completed their first growth stage are picked up from the cultivation zone by means of a forklift truck, for example equipped with a fork tray 29 with a series of parallel forks 30 that enable a large number of pots 2 placed next to one another to be picked up simultaneously and to be placed on the buffer conveyor belt 4 as a set, as illustrated in figure 6, in other words in a successive series of rows 31 of pots 2 placed next to one another.

The area of the buffer conveyor belt 4 enables an area of 4 metres by 2 metres to be covered with pots, for example.

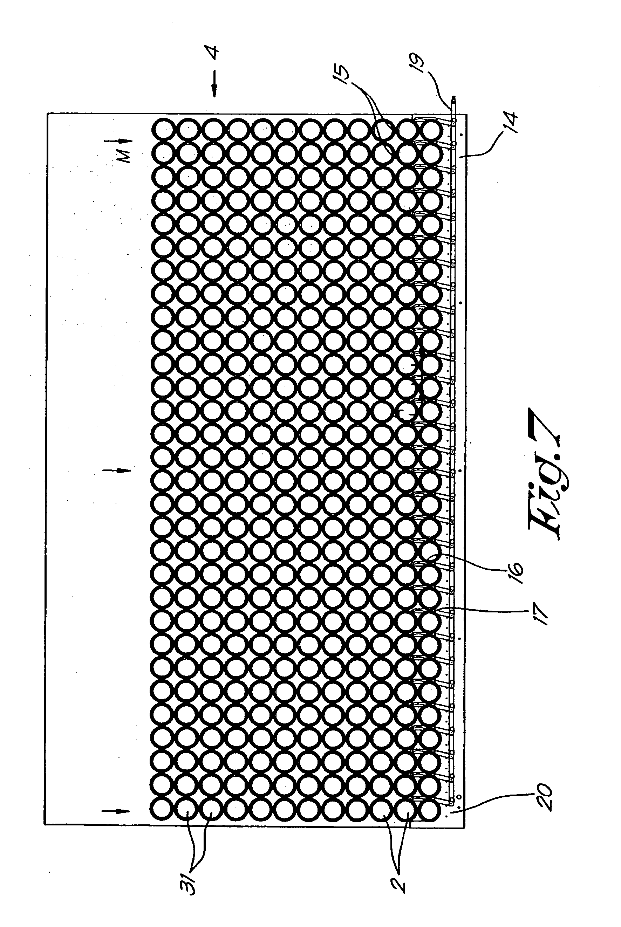

When the pots 2 are placed on the buffer conveyor belt 4 in this way, the buffer conveyor belt 4 is moved in the direction of the arrows M, as shown in figure 7, until the pots 2 of the first row 31 are between the teeth 15 of the singularisation system 5.

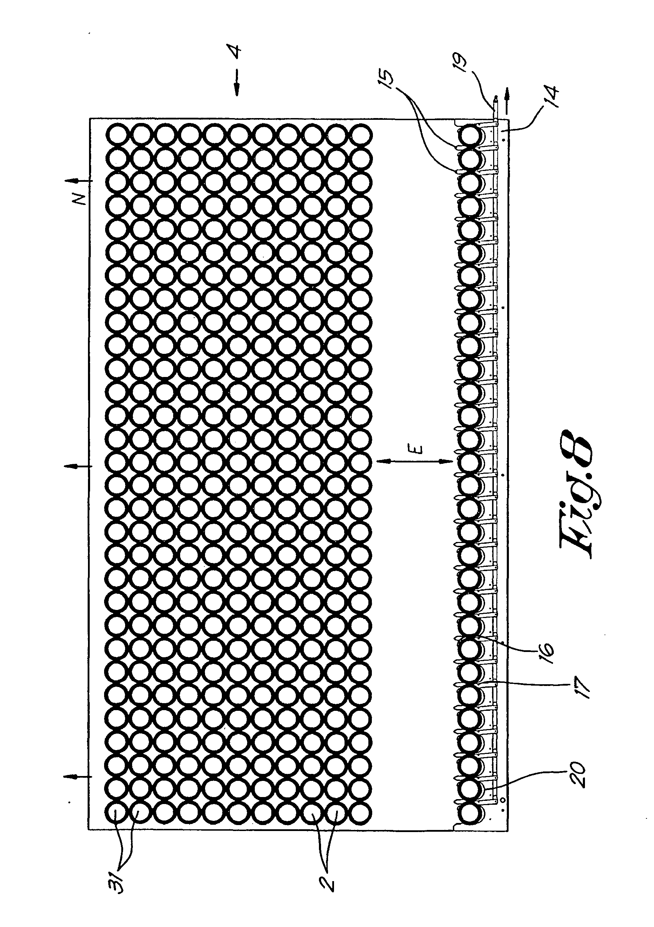

Then the claws 16 of the singularisation system are turned by means of the drive rod 19 to partially obstruct the openings 18 of the toothed slat 14, after which, as shown in figure 8, the buffer conveyor belt is moved in the opposite direction M whereby the pots are held between the teeth 15 of the singularisation system by the claws 16 to create a distance between the separated first row 31 and the remaining pots 2 on the buffer conveyor belt 4.

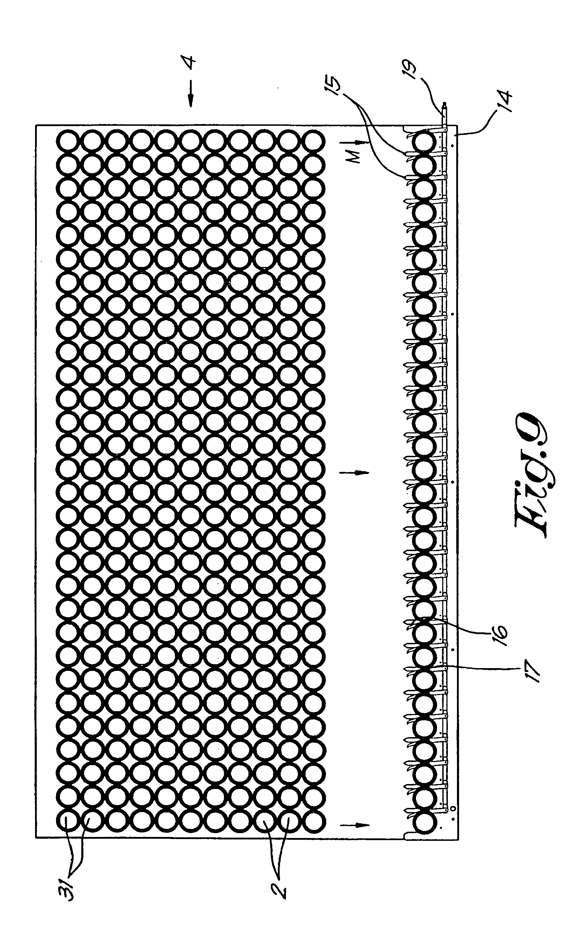

Then the buffer conveyor belt 4 is again moved in the direction of the arrows M, as shown in figure 9, until the pots 2 of the separated row 31 come up against the rabbet-forming recess 20.

In this way the pots 2 of the separated row 31 are perfectly aligned together in a line transverse to the drive direction X-X' of the robot 1.

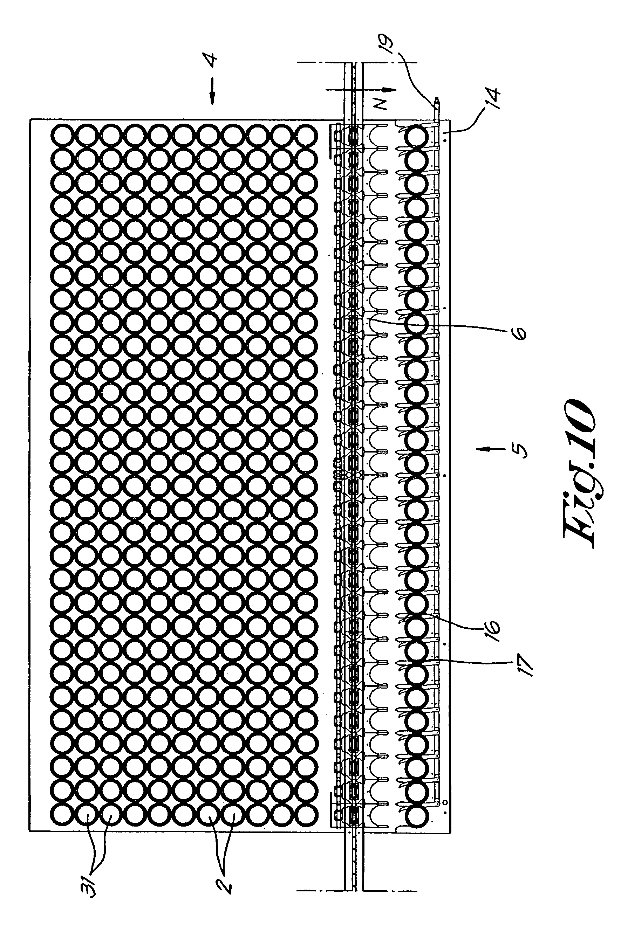

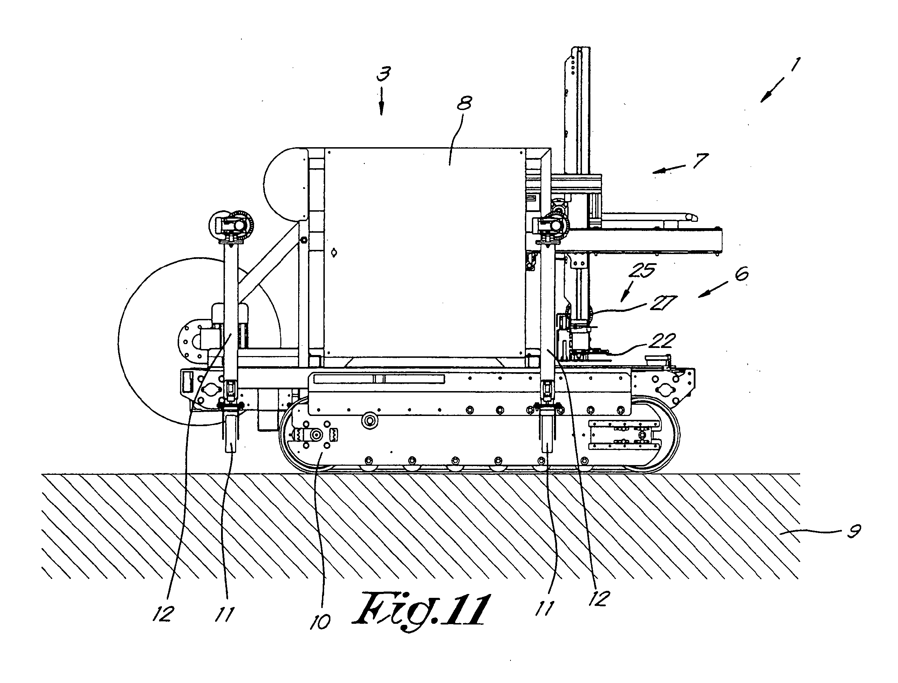

In a subsequent step the spreading fork 6 is positioned by means of the manipulator 7 in the free zone between the separated first row 31 and the following rows 31 on the buffer conveyor belt 4, with the pick-up forks 22 positioned against one another in such a way that their forks 23 are oriented towards the separated row 31, each time with one pick-up fork 22 opposite a pot 2 of the separated row 31, as shown in figures 10 and 11.

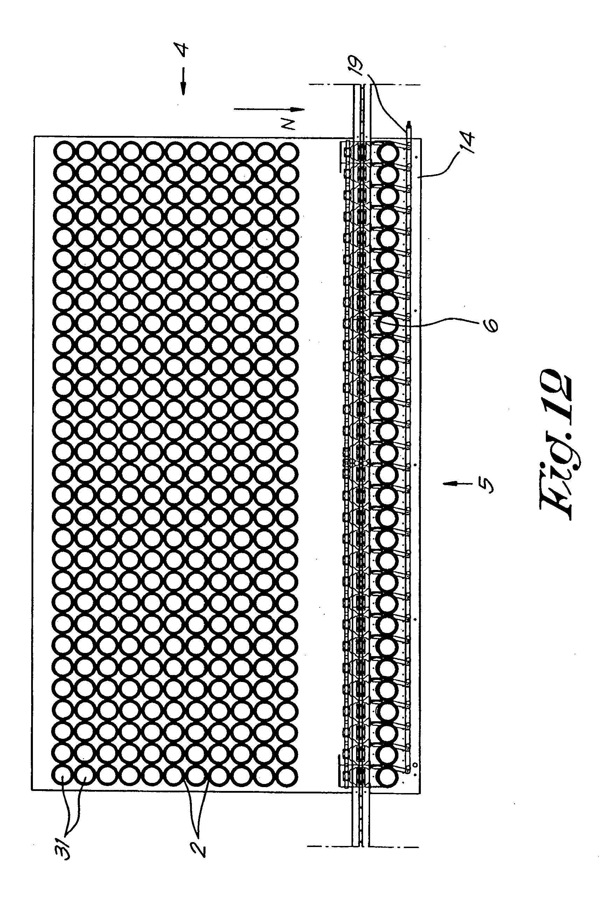

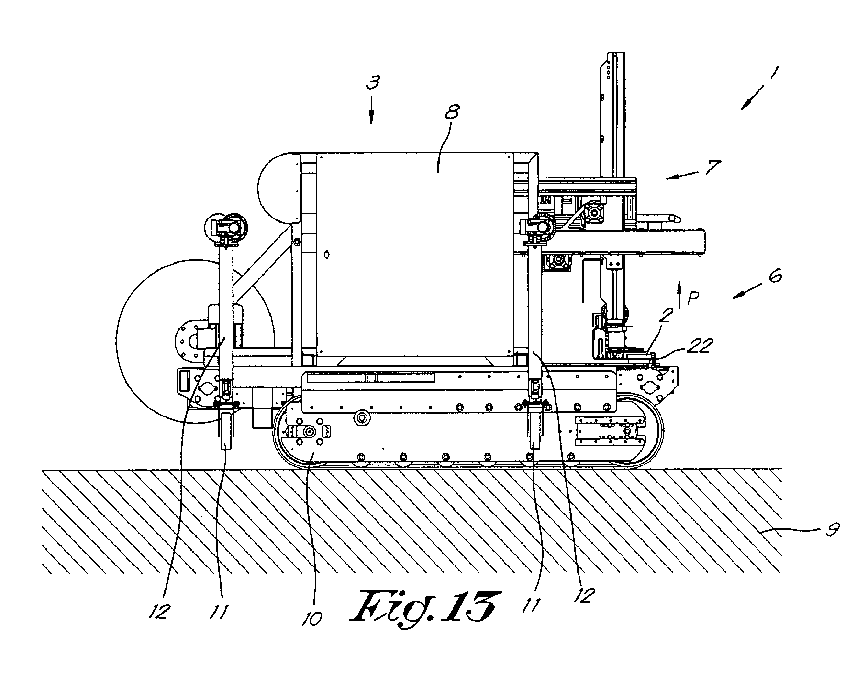

Then the spreading fork 6 is moved in the direction M as shown in figure 10, whereby the forks 23 of the pick-up forks 22 grip between the pots 2 under the collar 24 of the pots 2, as shown in figures 12 and 13.

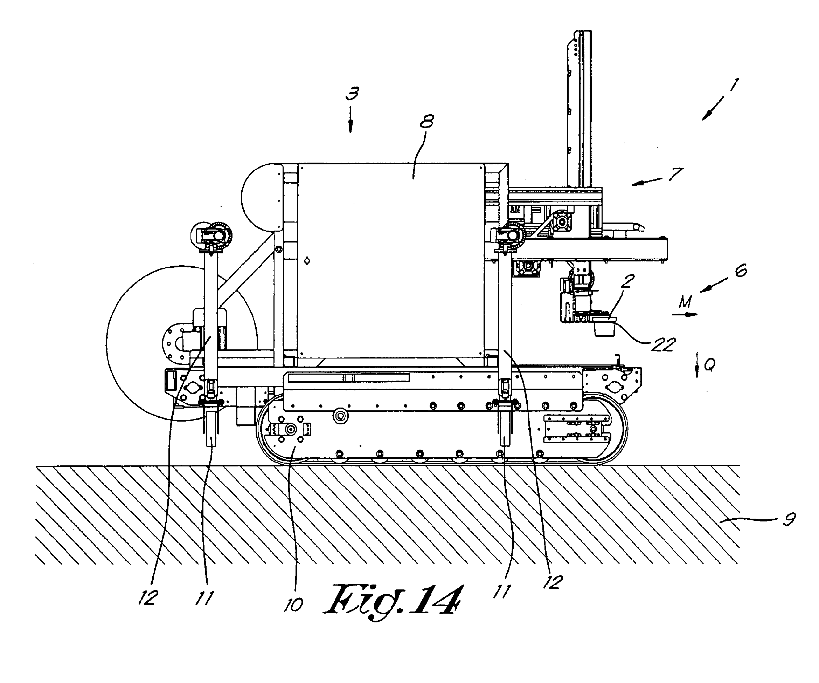

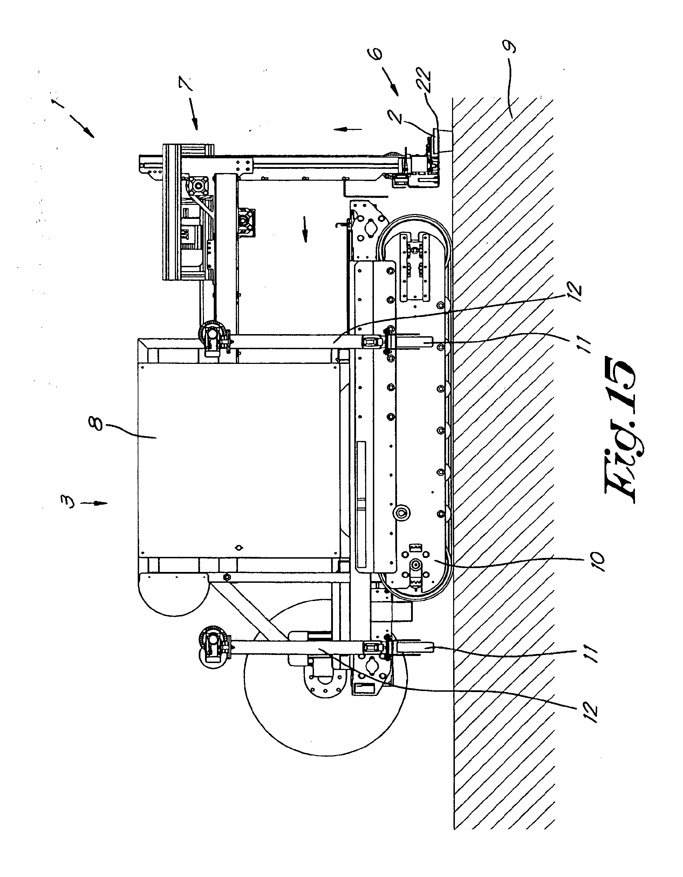

Then the spreading slat 6 is moved upwards in the direction P by the manipulator, whereby the pots 2 are lifted, as shown in figure 14, and then the pots 2 are moved in the spreading fork 6 in the direction M and set down in the direction Q, as illustrated in figure 14, to finally place the pots 2 on the base 9 in front of the robot 1, as illustrated in figures 15 and 16, whereby figure 16 is a top view of the spreading fork 6 of figure 15.

Then the spreading fork 6 can again be put in its position of figure 11 to be able to pick up a subsequent row of pots 2, which in the meantime has been separated by the singularisation system 5 in the aforementioned way.

When preparing the spreading fork 6 to pick up a subsequent row 31 of pots 2, the machine can move in the drive direction X-X' over a distance L that is equal to the desired distance between the pots 2 spread out on the base 9.

Thus the robot 1 can be controlled in a cyclical way to take rows 31 one by one from the buffer conveyor belt 4 and place them on the base 9 in a spread-out form, as shown in the successive cycles of figures 17 and 18.

An alternative embodiment of a spreading fork 6 is shown in figure 19, whereby the pick-up forks 22 are alternately positioned higher or lower than the adjacent pick-up fork 22. This can be done, for example, in the places where a high pick-up fork 22 is desired, by providing a second pick-up fork 22 at a height above the pick-up fork 22 of figure 1 already present.

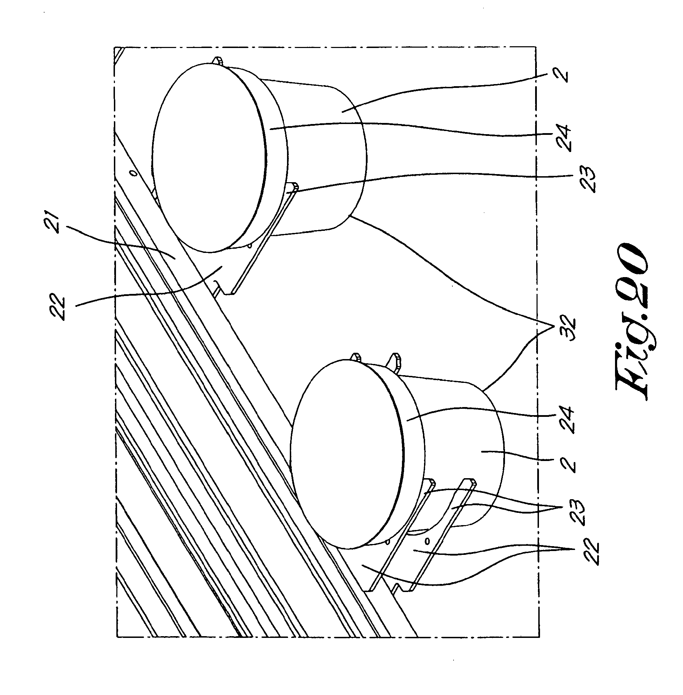

In this way, as shown on a larger scale in figure 20, the pots 2 are alternately picked up in a high and low position such that the bottoms 32 of the pots 2 are alternately higher and lower above the base 9.

This variant enables the pots 2 to be set down on the base 9 in two separate goes, i.e. in a first stage whereby only the pots 2 in the lowest position are set down on the base 9, and then in a second stage, for example after moving the robot 1 in the drive direction X-X', when the pots 2 in the highest position are set down.

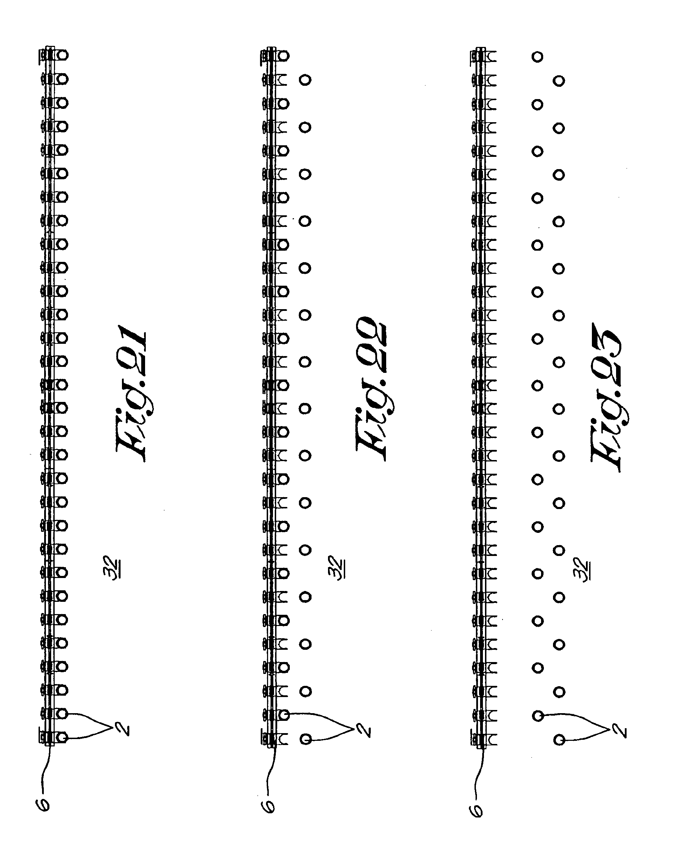

An application of this is illustrated in figures 21 to 23, whereby in figure 21 all pots 2 are still in the spreading fork 6, and whereby in figures 22 and 23 respectively the pots 2 in the lowest position are set down, and then the pots 2 in the high position are set down, such that the pots 2 are set down on the base 9 in a chequer formation, whereby the set-down pots 2 are the same distance from one another in the sideways direction and in the diagonal direction.

The present invention is by no means limited to the embodiments described as an example and shown in the drawings, but a robot according to the invention for setting out pots can be realised in all kinds of variants, without departing from the scope of the invention as defined by the appended claims.

## Claims

1. Robot (1) for setting out pots (2) on a base (9), **characterised in that** it primarily consists of at least an undercarriage (3) that can move in one drive direction (X-X') and on this undercarriage:
- a wide buffer conveyor belt (4) on which there can be a number of rows (31) of pots (2) placed next to one another along the width of the buffer conveyor belt (4) at the same time, in order to move the rows of pots (31) in a transport direction parallel to the drive direction (X-X');
- at one end of the buffer conveyor belt (4) there is a 'singularisation system' (5) for separating one row of pots (31) from the rest of the pots (2), with a distance (E) between the separated row (31) of pots (2) and the rest of the pots (2);
- a spreading fork (6) with a guide rail (21) that extends breadthways along the buffer conveyor belt (4), and on which a number of pick-up forks (22) for pots (2) are movably affixed to pick up the pots (2) of the separated row (31) of pots (2) and to spread out the pots (2) along the width of the buffer conveyor belt (4) with the desired distance between the pots (2);
- a manipulator (7) to be able to move the spreading fork (6) in the vertical direction and in a direction parallel to the drive direction (X-X') in order to be able to move the separated row of pots (31) from the buffer conveyor belt (4) to the aforementioned base (9); and,
- a controller (8) to control the robot (1) in a cyclical way such that in each cycle the pots (2) on the buffer conveyor belt (4) are separated row by row; the pots (2) of the separated row (31) are picked up from the buffer conveyor belt (4), spread out and moved to the base (9) and the robot (1) is moved over a desired distance in the aforementioned drive direction (X-X') in order to commence a subsequent cycle.

2. Robot according to claim 1, **characterised in that** the pick-up forks (22) of the spreading fork (6) are alternately affixed at two different heights and that the controller (8) is such that the pots (2) are set down on the base (9) in two goes, i.e. in a first stage where only the pots (2) in the lowest position in the pick-up forks (22) are set down on the base (9), after which the robot (1) with the remaining pots (2) in the highest position in the pick-up forks (22) is moved over a desired distance, and then these remaining pots (2) are set down on the base (9) in a second stage.

3. Robot according to claim 1 or 2, **characterised in that** the mobile undercarriage (3) is equipped with a caterpillar track drive (10).

4. Robot according to any of the previous claims, **characterised in that** the singularisation system (5) at one end of the buffer conveyor belt (4) is formed by a toothed slat (14) with teeth (15) above the buffer conveyor belt (4) oriented towards the pots (2) on the buffer conveyor belt (4), and which have a spacing along the width of the buffer conveyor belt (4) that primarily matches the diameter of the pots (2) to be set out at the height of the teeth (15) concerned, whereby each tooth (15) is equipped with a claw (16) that can be moved between an open position in which the opening (18) between two teeth (15) is primarily clear and a closed position whereby the opening (18) between two teeth (15) is at least partially obstructed to secure the pots (2) between the teeth (15) when the buffer conveyor belt (4) moves.

5. Robot according to claim 4, **characterised in that** each claw (16) can be rotated around a vertical axis (17), and that the claws (16) have a common drive rod (19) with which the claws (16) can be rotated simultaneously.

6. Robot according to claim 4 or 5, **characterised in that** the controller (8) is such that to separate a row of pots (31), the pots (2) on the buffer conveyor belt (4) are moved with the buffer conveyor belt (4) in the direction of the singularisation system (5) until the pots (2) of the row of pots (31) to be separated are between the teeth (15) of the singularisation system (5), after which the claws (16) are brought to the closed position and the buffer conveyor belt (4) is then moved over a distance in the opposite direction.

7. Robot according to claim 6, **characterised in that** there is an alignment rabbet (20) between the teeth (15) for the pots (2) and that the controller is such that, after separating a row of pots (31), the buffer conveyor belt (4) is again driven in the opposite direction in order to move the pots (2) against the aforementioned alignment rabbet (20) to align the pots (2) of the separated row of pots (31).

8. Robot according to claim 7, **characterised in that** the alignment rabbet (20) has the form of a recess in the shape of an arch with a radius of curvature equal to the diameter of the pots (2) at the height of the alignment rabbet (20).

9. Robot according to any one of the previous claims, **characterised in that** the pick-up forks (22) are each equipped with a separately controlled drive for the movement on the aforementioned guide rail (21).

10. Robot according to any one of the previous claims, **characterised in that** at least a part of the pick-up forks (22) are connected together by means of a flexible foldable belt (28), whereby only the outermost of the pick-up forks (22) connected together is equipped with a drive and this outermost pick-up fork (22), thanks to the aforementioned belts (28), pulls the other thus connected pick-up forks (22) into motion.

11. Robot according to any of the previous claims, **characterised in that** the pick-up forks (22) present a U-shaped recess with a radius of curvature primarily corresponding to the diameter of the pots (2) at the height of the place where they are picked up by the pick-up forks (22).

12. Robot according to any of the previous claims, **characterised in that** the height difference between the pick-up forks (22) is created by pick-up forks (22) with a different thickness.

13. Robot according to any of the previous claims, **characterised in that** the mobile undercarriage (3) is equipped with height-adjustable wheels (11) that can be moved between an operating position in which the wheels (11) are pulled upwards and the robot (1) rests on the caterpillar tracks (10), and a transport position in which the wheels (11) are let down to push the robot (1) with the caterpillar tracks (11) from the base (9), whereby the robot (1) rests on the wheels (11).

14. Robot according to claim 13, **characterised in that** the mobile undercarriage (3) is equipped with a shaft or towbar (13) to be able to pull or push the robot (1).

15. Robot according to any of the previous claims, **characterised in that** the controller (8) contains a GPS receiver for the location of the robot and if necessary the spreading fork (6).

## Patentansprüche

1. Roboter (1) zum Aufstellen von Töpfen (2) auf einem Untergrund (9), **dadurch gekennzeichnet, dass** er im Wesentlichen aus mindestens einem in einer Fahrtrichtung (X-X') verfahrbaren Untergestell (3) besteht, und auf diesem Untergestell:
- einem breiten Pufferförderband (4), worauf gleichzeitig eine Anzahl von Reihen (31) von über die Breite des Pufferförderbandes (4) nebeneinander platzierten Töpfen (2) vorhanden sein kann, um die Topfreihen (31) in einer Transportrichtung parallel zur Fahrtrichtung (X-X') zu bewegen;
- an einem Ende des Pufferförderbandes (4) befindet sich ein "Vereinzelungssystem" (5) zum Absondern einer Topfreihe (31) vom Rest der Töpfe (2), mit einem Abstand (E) zwischen der abgesonderten Reihe (31) von Töpfen (2) und dem Rest der Töpfe (2);
- eine Spreizgabel (6) mit einer Führungsschiene (21), die sich in der Breitenrichtung des Pufferförderbandes (4) erstreckt und woran eine Anzahl von Aufnehmergabeln (22) für Töpfe (2) bewegbar befestigt ist, um die Töpfe (2) der abgesonderten Reihe (31) von Töpfen (2) aufzunehmen und um die Töpfe (2) in der Breite des Puffertransportbandes (4) mit dem gewünschten Abstand zwischen den Töpfen (2) auszubreiten;
- ein Manipulator (7), um die Spreizgabel (6) in vertikaler Richtung und in einer Richtung parallel zur Fahrtrichtung (X-X') bewegen zu können, um die abgesonderte Topfreihe (31) von dem Pufferförderband (4) auf den vorgenannten Untergrund (9) bewegen zu können; und
- eine Steuerung (8) zum zyklischen Steuern des Roboters (1), sodass in jedem Zyklus die Töpfe (2) auf dem Pufferförderband (4) Reihe für Reihe abgesondert werden; die Töpfe (2) der abgesonderten Reihe (31) von dem Pufferförderband (4) aufgenommen, ausgebreitet und bis auf den Untergrund (9) bewegt werden und der Roboter (1) über einen gewünschten Abstand in der vorgenannten Fahrtrichtung (X-X') bewegt wird, um einen nachfolgenden Zyklus zu beginnen.

2. Roboter nach Anspruch 1, **dadurch gekennzeichnet, dass** die Aufnehmergabeln (22) der Spreizgabel (6) abwechselnd in zwei verschiedenen Höhen angebracht sind und dass die Steuerung (8) so ist, dass die Töpfe (2) zu zwei Zeitpunkten auf dem Untergrund (9) abgesetzt werden, nämlich in einem ersten Stadium, wobei nur die Töpfe (2) in den Aufnehmergabeln (22) mit der niedrigsten Position auf dem Untergrund (9) abgesetzt werden, wonach der Roboter (1) mit den übrigen Töpfen (2) in den Aufnehmergabeln (22) mit der höchsten Position über einen gewünschten Abstand bewegt wird und dann diese übrigen Töpfe (2) in einem zweiten Stadium auf dem Untergrund (9) abgesetzt werden.

3. Roboter nach Anspruch 1 oder 2, **dadurch gekennzeichnet, dass** das verfahrbare Untergestell (3) mit einem Raupenkettenantrieb (10) ausgerüstet ist.

4. Roboter nach einem der vorgenannten Ansprüche, **dadurch gekennzeichnet, dass** das Vereinzelungssystem (5) an einem Ende des Pufferförderbandes (4) durch eine gezahnte Leiste (14) mit Zähnen (15) über dem Pufferförderband (4) gebildet wird, welche Zähne zu den Töpfen (2) auf dem Pufferförderband (4) gerichtet sind und welche in der Breitenrichtung des Pufferförderbandes (4) eine Beabstandung aufweisen, die im Wesentlichen dem Durchmesser der aufzustellenden Töpfe (2) in Höhe der betreffenden Zähne (15) entspricht, wobei jeder Zahn (15) mit einer Klaue (16) ausgestattet ist, die zwischen einer offenen Position, worin die Öffnung (18) zwischen zwei Zähnen (15) im Wesentlichen frei ist, und einer geschlossenen Position, wobei die Öffnung (18) zwischen zwei Zähnen (15) mindestens teilweise versperrt ist, um die Töpfe (2) zwischen den Zähnen (15) festzuhalten, wenn sich das Pufferförderband (4) bewegt, bewegt werden kann.

5. Roboter nach Anspruch 4, **dadurch gekennzeichnet, dass** jede Klaue (16) um eine vertikale Achse (17) rotiert werden kann und dass die Klauen (16) eine gemeinsame Antriebsstange (19) aufweisen, womit die Klauen (16) gleichzeitig rotiert werden können.

6. Roboter nach Anspruch 4 oder 5, **dadurch gekennzeichnet, dass** die Steuerung (8) derart ist, dass zum Absondern einer Topfreihe (31) die Töpfe (2) auf dem Pufferförderband (4) mit dem Pufferförderband (4) in die Richtung des Vereinzelungssystems (5) bewegt werden, bis die Töpfe (2) der abzusondernden Topfreihe (31) sich zwischen den Zähnen (15) des Vereinzelungssystems (5) befinden, wonach die Klauen (16) in die geschlossene Position gebracht werden und das Pufferförderband (4) dann über einen Abstand in die entgegengesetzte Richtung bewegt wird.

7. Roboter nach Anspruch 6, **dadurch gekennzeichnet, dass** sich zwischen den Zähnen (15) ein Ausrichtanschlag (20) für die Töpfe (2) befindet und dass die Steuerung derart ist, dass nach dem Absondern einer Topfreihe (31) das Pufferförderband (4) wieder in der entgegengesetzten Richtung angetrieben wird, um die Töpfe (2) gegen den vorgenannten Ausrichtanschlag (20) zu bewegen, um die Töpfe (2) der abgesonderten Topfreihe (31) auszurichten.

8. Roboter nach Anspruch 7, **dadurch gekennzeichnet, dass** der Ausrichtanschlag (20) die Form einer Ausnehmung in Form eines Kreisbogens mit einem Krümmungsradius gleich dem Durchmesser der Töpfe (2) in Höhe des Ausrichtanschlags (20) aufweist.

9. Roboter nach einem der vorgenannten Ansprüche, **dadurch gekennzeichnet, dass** die Aufnehmergabeln (22) jede mit einem getrennt gesteuerten Antrieb für die Bewegung auf der vorgenannten Führungsschiene (21) ausgestattet sind.

10. Roboter nach einem der vorgenannten Ansprüche, **dadurch gekennzeichnet, dass** mindestens ein Teil der Aufnehmergabeln (22) mittels eines flexiblen faltbaren Bandes (28) miteinander verbunden sind, wobei nur die äußerste der miteinander verbundenen Aufnehmergabeln (22) mit einem Antrieb ausgestattet ist und diese äußerste Aufnehmergabel (22) dank der vorgenannten Bänder (28) die anderen damit verbundenen Aufnehmergabeln (22) in ihrer Bewegung mitzieht.

11. Roboter nach einem der vorgenannten Ansprüche, **dadurch gekennzeichnet, dass** die Aufnehmergabeln (22) eine U-förmige Ausnehmung mit einem Krümmungsradius aufweisen, der im Wesentlichen mit dem Durchmesser der Töpfe (2) in Höhe der Stelle, an der sie von den Aufnehmergabeln (22) aufgenommen werden, übereinstimmt.

12. Roboter nach einem der vorgenannten Ansprüche, **dadurch gekennzeichnet, dass** der Höhenunterschied zwischen den Aufnehmergabeln (22) durch Aufnehmergabeln (22) mit verschiedener Dicke erzeugt wird.

13. Roboter nach einem der vorgenannten Ansprüche, **dadurch gekennzeichnet, dass** das verfahrbare Untergestell (3) mit höhenverstellbaren Rädern (11) versehen ist, die zwischen einer Betriebsposition, worin die Räder (11) aufwärts gezogen sind und der Roboter (1) auf den Raupenketten (10) ruht, und einer Transportposition, worin die Räder (11) nach unten gelassen sind, um den Roboter (1) mit den Raupenketten (11) von dem Untergrund (9) abzudrücken, wobei der Roboter (1) auf den Rädern (11) aufliegt, bewegt werden können.

14. Roboter nach Anspruch 13, **dadurch gekennzeichnet, dass** das verfahrbare Untergestell (3) mit einer Deichsel oder Zugstange (13) ausgestattet ist, um den Roboter (1) ziehen oder drücken zu können.

15. Roboter nach einem der vorgenannten Ansprüche, **dadurch gekennzeichnet, dass** die Steuerung (8) einen GPS-Empfänger zum Lokalisieren des Roboters und gegebenenfalls der Spreizgabel (6) enthält.

## Revendications

1. Robot (1) pour disposer des pots (2) sur une base (9), **caractérisé en ce qu'**il est constitué principalement par au moins un châssis de roulement (3) qui peut se déplacer dans une direction d'entraînement (X-X') et, sur ce châssis de roulement :
- par une large courroie transporteuse faisant tampon (4) sur laquelle on peut prévoir un certain nombre de rangées (31) de pots (2) placées les unes à côté des autres sur la largeur de la courroie transporteuse faisant tampon (4) en même temps, afin de déplacer les rangées de pots (31) dans une direction de transport qui est parallèle à la direction d'entraînement (X-X') ;
- par un « système de singularisation » (5) qui est prévu à une extrémité de la courroie transporteuse faisant tampon (4), pour séparer une rangée de pots (31) du reste des pots (2), avec une distance (E) entre la rangée séparée (31) de pots (2) et le reste des pots (2) ;
- par une fourche d'épandage (6) comprenant un rail de guidage (21) qui s'étend sur toute la largeur de la courroie transporteuse faisant tampon (4) et sur laquelle sont fixées en mobilité un certain nombre de fourches de prélèvement (22) pour prélever les pots (2) de la rangée séparée (31) de pots (2) et pour déployer les pots (2) sur toute la largeur de la courroie transporteuse faisant tampon (4) avec la distance désirée entre les pots (2) ;
- par un manipulateur (7) pour pouvoir déplacer la fourche d'épandage (6) dans la direction verticale et dans une direction parallèle à la direction d'entraînement (X-X') pour pouvoir déplacer la rangée séparée de pots (31) depuis la courroie transporteuse faisant tampon (4) jusqu'à la base susmentionnée (9) ; et
- par un contrôleur (8) pour la commande du robot (1) d'une manière cyclique de telle sorte que, dans chaque cycle, les pots (2) sur la courroie transporteuse faisant tampon (4) sont séparés rangée par rangée, les pots (2) de la rangée séparée (31) étant prélevés de la courroie transporteuse faisant tampon (4), déployés et déplacés en direction de la base (9), et le robot (1) se déplaçant sur la distance désirée dans la direction d'entraînement susmentionnée (X-X') afin de commencer un nouveau cycle.

2. Robot selon la revendication 1, **caractérisé en ce que** les fourches de prélèvement (22) de la fourche d'épandage (6) sont fixées en alternance à deux hauteurs différentes, et **en ce que** le contrôleur (8) est conçu de telle sorte que les pots (2) sont déposés sur la base (9) en deux fois, c'est-à-dire dans une première étape dans laquelle uniquement les pots (2) qui sont situés dans la position la plus basse dans les fourches de prélèvement (22) sont déposés sur la base (9), après quoi le robot (1) avec les pots restants (2) dans la position la plus élevée dans les fourches de prélèvement (22) se déplace sur une distance désirée, et ensuite déposer ces pots restants (2) sont déposés sur la base (9) dans une deuxième étape.

3. Robot selon la revendication 1 ou 2, **caractérisé en ce que** le châssis de roulement mobile (3) est équipé d'un entraînement à chenille (10).

4. Robot selon l'une quelconque des revendications précédentes, **caractérisé en ce que** le système de singularisation (5) à une extrémité de la courroie transporteuse faisant tampon (4) est réalisé sous la forme d'une plaque dentée (14) dont les dents situées au-dessus de la courroie transporteuse faisant tampon (4) sont orientées en direction des pots (2) sur la courroie transporteuse faisant tampon (4) et possèdent un écartement sur la largeur de la courroie transporteuse faisant tampon (4) qui correspond principalement au diamètre des pots (2) qui doivent être déposés à hauteur des dents (15) concernées, chaque dent (15) étant équipée d'une mâchoire (16) qui peut prendre soit une position ouverte dans laquelle l'ouverture (18) entre deux dents (15) est principalement inoccupée, soit une portion position fermée par laquelle l'ouverture (18) entre deux dents (15) est au moins en partie obstruée pour fixer les pots (2) entre les dents (15) lorsque la courroie transporteuse faisant tampon (4) se déplace.

5. Robot selon la revendication 4, **caractérisé en ce que** chaque mâchoire (16) peut effectuer des rotations autour d'un axe vertical (17), et **en ce que** les mâchoires (16) possèdent une tige d'entraînement commune (19) avec laquelle on peut faire tourner les mâchoires (16) de manière simultanée.

6. Robot selon la revendication 4 ou 5, **caractérisé en ce que** le contrôleur (8) est conçu de telle sorte que, pour séparer une rangée de pots (31), les pots (2) sur la courroie transporteuse faisant office de tampon (4) sont déplacés avec la courroie transporteuse faisant office de tampon (4) dans la direction du système de singularisation (5) jusqu'à ce que les pots (2) de la rangée de pots (31) à séparer se retrouvent entre les dents (15) du système de singularisation (5) ; après quoi, les mâchoires (16) sont amenées dans leur position fermée et la courroie transporteuse faisant office de tampon (4) se déplace alors sur une certaine distance dans la direction opposée.

7. Robot selon la revendication 6, **caractérisé en ce qu'**on prévoit une rainure d'alignement (20) entre les dents (15) pour les pots (2) et **en ce que** le contrôleur est conçu de telle sorte que, après séparation d'une rangée de pots (31), la courroie transporteuse faisant tampon (4) est à nouveau entraînée dans la direction opposée dans le but de déplacer les pots (2) contre la rainure d'alignement susmentionnée (20) afin d'aligner les pots (2) de la rangée séparée de pots (31).

8. Robot selon la revendication 7, **caractérisé en ce que** la rainure d'alignement (20) prend la forme d'un évidement qui possède la configuration d'un arc dont le rayon de courbure est égal au diamètre des pots (2) à hauteur de la rainure d'alignement (20).

9. Robot selon l'une quelconque des revendications précédentes, **caractérisé en ce que** les fourches de prélèvement (22) sont chacune équipée d'un entraînement commandé de manière séparée pour le mouvement sur le rail de guidage susmentionné (21).

10. Robot selon l'une quelconque des revendications précédentes, **caractérisé en ce qu'**au moins une partie des fourches de prélèvement (22) sont reliées l'une à l'autre au moyen d'une courroie pliable flexible (28), seule la fourche la plus externe parmi les fourches de prélèvement (22) reliées les unes aux autres étant équipée d'un entraînement et cette fourche de prélèvement la plus externe (22), grâce aux courroies susmentionnées (28), met en mouvement par traction les autres fourches de prélèvement (22) ainsi reliées.

11. Robot selon l'une quelconque des revendications précédentes, **caractérisé en ce que** les fourches de prélèvement (22) présentent un évidement en forme de U dont le rayon de courbure correspond principalement au diamètre des pots (2) à hauteur de l'endroit où ils sont prélevés par les fourches de prélèvement (22).

12. Robot selon l'une quelconque des revendications précédentes, **caractérisé en ce que** la différence de hauteur entre les fourches de prélèvement (22) est obtenue par le fait que les fourches de prélèvement (22) possèdent des épaisseurs différentes.

13. Robot selon l'une quelconque des revendications précédentes, **caractérisé en ce que** le châssis de roulement mobile (3) est équipé de roues (11) dont on peut régler la hauteur, qui peuvent passer d'une position de travail dans laquelle les roues (11) sont tirées vers le haut et le robot (1) s'appuie sur les chenilles (10) et une position de transport dans laquelle les roues (11) sont abaissées pour pousser le robot (1) avec la chenille (11) à l'écart de la base (9), si bien que le robot (1) vient s'appuyer sur les roues (11).

14. Robot selon la revendication 13, **caractérisé en ce que** le châssis de roulement mobile (3) est équipé d'un arbre ou d'un timon (13) pour pouvoir tirer ou pousser le robot (1).

15. Robot selon l'une quelconque des revendications précédentes, **caractérisé en ce que** le contrôleur (8) contient un récepteur GPS pour la localisation du robot et si nécessaire de la fourche d'épandage (6).
